# EUROPEAN PATENT APPLICATION

(11) **EP 0 838 146 A2**
(43) Date of publication of application: **29.04.1998**
(21) Application number: 97203888.9
(22) Date of filing: 10.06.1988
(51) Int. Cl.: A01D 78/10

(54) **A hay-making machine**

(30) Priority: 23.06.1987 NL 8701461; 12.01.1988 NL 8800065
(62) Divisional of application: 93200034.2
(71) Applicant: C. van der Lely N.V., NL-3155 PD Maasland (NL)
(72) Inventor: Van der Lely, Cornelis, 6300 Zug (CH); Bom, Cornelis Johannes Gerardus, 3181 VC Rozenburg (NL)
(74) Representative: Mulder, Herman

(57) **Abstract**

The invention relates to a hay-making machine comprising a frame (1) including a first frame beam supporting at least six rake members (11, 14, 16) which are drivable about upwardly directed, rotary axes (12) and are supported side-by-side in a frame beam (2) comprising frame beam sections (4, 5, 8) which are pivotally connected with one another, such that part of the rake members (11, 14, 16) supported by one or more frame beam sections is upwardly pivotable to a transport position, whereby the machine is provided with a second frame beam (3) having the same number of beam sections (24, 25, 28) as the first mentioned frame beam (2), which sections are pivotally connected with one another about pivot shafts, wherein the pivot shafts (26, 27) of the second frame beam (3) are located in the extension of the near-by pivot shafts (6, respectively 9) of the first frame beam (2).

## Description

The invention relates to a hay-making machine comprising a frame including a first frame beam supporting at least six rake members which are drivable about upwardly directed, rotary axes and are supported side-by-side in a frame beam comprising frame beam sections which are pivotally connected with one another, such that part of the rake members supported by one or more frame beam sections is upwardly pivotable to a transport position.

The known machines of this kind are provided with a protecting beam in front of the machine and separately curved beams at the side of the machine.

The object of the invention is to improve such a machine.

According to the inventention the machine is provided with a second frame beam having the same number of beam sections as the first mentioned frame beam, which sections are pivotally connected with one another about pivot shafts, wherein the pivot shafts (26, 27) of the second frame beam are located in the extension of the near-by pivot shafts of the first frame beam.

The machine according to the invention has the advantage that the construction is in particular suitable for very long machines, e.g. machines with a working width from 7 to 8 metres or more. On these machines the load for carrying the rake members is large, but with the construction according to the invention, it is possible to response to relative high bending moments.

Moreover the centre of gravity of the machine can be located nearer to the coupling points of the three-point lifting device of a tractor than in the case of one single frame beam.

According to a further object of the invention the machine can be provided with a suitable protection for the rake members in the transport position and therefor according to the invention the second frame beam is provided with a horizontal carrier.

This carrier has at its ends vertically arranged brackets, each of which is provided with hinges which constitute an approximately vertical pivot shaft for a screen.

For a better understanding of the invention and to show how the same may be carried into effect, reference will now be made, by way of example, to the accompanying drawings, in which:
Figure 1 is a plan view of a first embodiment of a machine according to the invention in its operating position;
Figure 2 is a rear view of the machine in accordance with Figure 1;
Figure 3 is a side view of the machine shown in Figures 1 and 2;
Figure 4 is partly a view and partly a cross-sectional view taken on the lines IV - IV in Figure 1;
Figure 5 is a rear view of the machine according to the invention in a transport position with upwardly folded rake members;
Figure 6 is a hydraulic circuit diagram for folding the rake members upwardly to the transport position;
Figure 7 is a rear view of a second embodiment of a machine according to the invention, in which view both the operating position and the upwardly folded transport position of the rake members are shown;
Figure 8 shows the structure near the arrow VIII in Figure 7, seen in rear view;
Figure 9 shows the structure near the arrow IX in Figure 7, seen in rear view;
Figure 10 shows, seen in rear view, a partial cross-section in the region of the arrow X in Figure 2 for the first embodiment and also of the arrow X in Figure 9 relating to the second embodiment;
Figure 11 is an alternative embodiment for the structure of Figure 10 and also relates to the structure near the arrow XI in Figures 2 and 9 for the first and second embodiment, respectively;
Figure 12 is partly a plan view and partly a cross-sectional view taken in the direction of the arrow XII shown in both Figures 2 and 7, i.e. for the two embodiments of the machine according to the invention;
Figure 13 is a schematical rendering of a rear view of the machine in accordance with Figures 7 to 9, and
Figure 14 is a detail indicated in Figure 13 by the letter(s) P and/or Q.

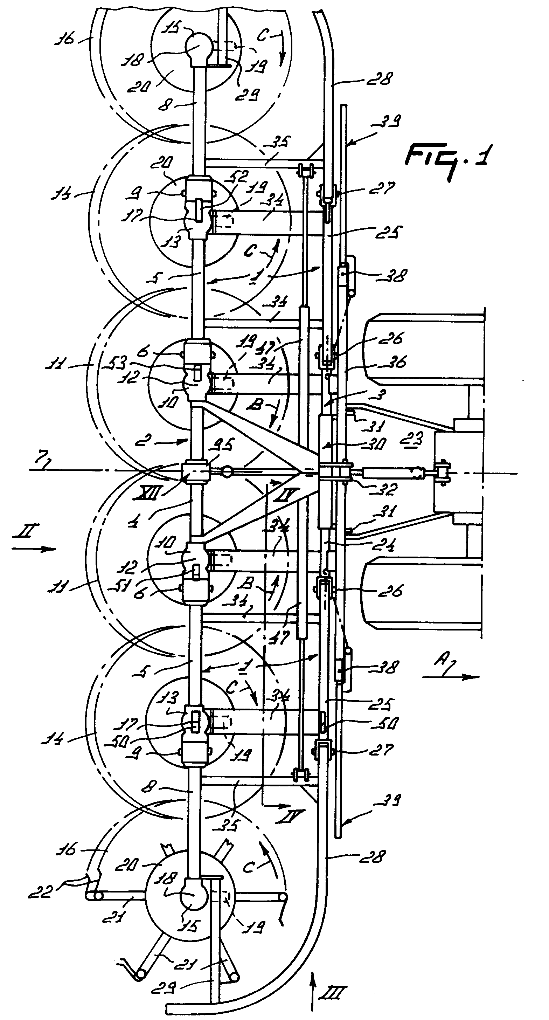

The hay-making machine of the first embodiment (Figures 1 to 6), which is designed as a hay tedder, comprises a frame 1 including a first frame beam 2 and a second frame beam 3. Seen in plan view, in the operating position of the machine, the frame beams 2 and 3 extend transversely to the direction of operative travel A and parallel to each other. The first frame beam 2 comprises a central frame section 4 which is rigid against bending and against torsion and which at both its ends is connected pivotably to an intermediate section 5 which is rigid against bending and against torsion by means of approximately horizontal pivot shafts 6 which, in plan view, extend perpendicularly to the central frame section 4, the said pivot shafts extending in the arrangement shown in Figure 1 approximately parallel to the direction of operative travel A. However, the machine in accordance with the invention may also extend relative to the direction of operative travel A at an angle other than 90°, as is e.g. customary for side delivery rakes (though with a lower number of rake members). In that case, the rake members are driven in the same direction of rotation; then, of course, the said pivot shafts are also arranged at an oblique angle relative to the direction of operative travel A.

Each of the two intermediate sections 5 of the first frame beam 2 is connected at its end facing away from the symmetry plane 7 to an end section 8 by means of a pivot shaft 9 arranged parallel to the said pivot shafts 6.

Near the two pivot shafts 6, the central frame section 4 carries gear boxes 10 accommodating the drives and bearings of two adjacently arranged rake members 11, which rake members are drivable in opposite directions of rotation B. The rake members 11 are rotatable about upwardly directed rotary axes 12 which, taken in the upward direction, slope forwardly.

Each of the intermediate sections 5 of the first frame beam 2 supports a gear box 13 which is located near the pivot shaft 9 and accommodates the drive and bearing of a rake member 14.

Near the free end of each of the two end sections 8 of the first frame beam 2, there is provided a gear box 15 accommodating the drive and bearing of a rake member 16. The two rake members 14 and 16 arranged at each side of the machine are drivable in mutually opposite directions of rotation C about upwardly directed rotary shafts 17 and 18, respectively, the said rotary shafts being arranged parallel to the rotary axes 12.

Seen in plan view, the central frame section 4, the two intermediate sections 5 and the two end sections 8 are arranged in alignment. In other words, in this embodiment, the centre lines of the tubular central frame section 4, those of the intermediate sections 5 as well as those of the end sections 8 are in alignment.

During operation, each of the rake members 11, 14, 16 is supported by a ground wheel 19 in a known per se manner.

Each of the six rake members 11, 14, 16 is provided with a plate-shaped and circular hub 20, to which, distributed over mutually equal circumferential angles, a number of, in this embodiment six, outwardly and obliquely downwardly directed spokes 21 are fitted, which spokes, in plan view, extend in the radial direction. In this embodiment, the end of each spoke 21 is provided with a set of tines of approximately radially extending operative tines 22 (Figure 1), but, alternatively, the tines may also extend downwardly in their totality.

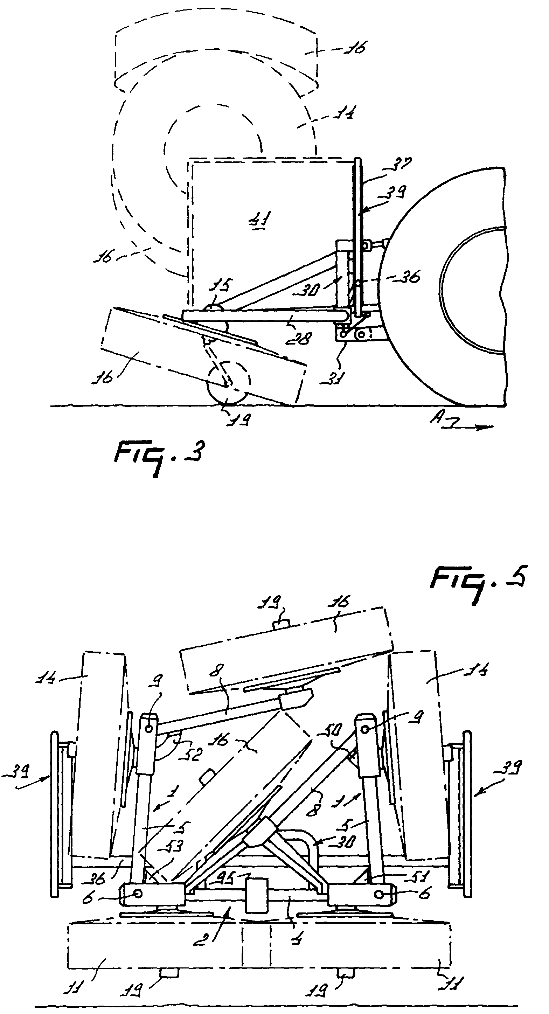

Taken in the direction of operative travel A, the second frame beam 3 is arranged at some distance in front of the said first frame beam 2. In Figure 1, the spacing therebetween is slightly more than the radius of the rake members 11, 14, 16, and the positioning of the two said frame beams is such that the centre of gravity thereof is located as closely as possible to the coupling points of a three-point lifting hitch 23 of the tractor hauling the machine. However, the said spacing may also be approximately equal to the radius of the rake members or even less. The second, frontmost frame beam 3 includes a central section 24 (Figures 1 and 4) which is rigid against bending and against torsion and which, like the central frame section 4, is arranged symmetrically relative to the symmetry plane 7. Near its two outer ends, the central section 24 is connected pivotably to intermediate sections 25, which are rigid against bending and against torsion, by means of pivot shafts 26 extending approximately horizontally and into the direction of operative travel A. At their ends facing away from the symmetry plane 7, the two intermediate sections 25 of the second frame beam 3 are coupled pivotably to end sections 28 by means of pivot shafts 27 which are arranged parallel to the said pivot shafts 26.

Seen both in a plan view and in a horizontal view, the central section 24, the two intermediate sections 25 and those parts of the end sections 28 that are contiguous to the pivot shafts 27 are in alignment.

Those parts of the end sections 28 that are perpendicular to the symmetry plane 7 extend from the associated pivot shaft 27 to a near-by vertical plane extending in the direction of operative travel A and comprising the near-by rotary shafts 18, whereafter the said end sections extend with a curve outwardly and rearwardly towards, seen in plan view, the outermost tip positions of the sets of tines of the near-by rake members 16.

Each of the two end sections 8 of the first frame beam 2 is rigidly connected by means of a connecting beam 29 to that part of the end section 28 that is located at the outer side of the relevant rake wheel 16.

The central frame section 4 of the first frame beam 2 and the central section 24 of the second frame beam 3 are rigidly interconnected by means of a trestle 30 which, at its front side, is provided with two lower connecting means 31 and an upper coupling point 32 for coupling the machine to the lower lifting arms and to the top rod, respectively, of the three-point lifting hitch 23. Seen in plan view and taken in the direction of operative travel A, the coupling points 31 and 32 are located at a short distance in front of the second frame beam 3. In addition, the central frame sections 4 and 24 are rigidly interconnected by means of approximately horizontal frame beams 33 extending parallel to the direction of operative travel A, which frame beams 33 are designed rigid against bending at least in a vertical plane and are attached rigidly to the central frame sections 4 and 24, respectively, as closely as possible near the pivot shafts 6 and 26, respectively.

Similarly, the intermediate sections 5 of the first frame beam 2 and the intermediate sections 25 of the second frame beam 3 are rigidly interconnected by means of approximately horizontal frame beams 34 extending parallel to the direction of operative travel A, whilst the end sections 8 and 28 are rigidly interconnected by means of frame beams 35 which are arranged parallel to the frame beams 33 and 34 and are welded to the said end sections 8 and 28 near the pivot shafts 9 and 27. In addition, near its free end, the end section 8 is rigidly connected via the connecting beam 29 to the outer part of the end section 28, which outer part, seen in plan view, approximately has the shape of the arc of a circle.

However, the respective frame beams 33, 34 and 35 may also enclose an angle of e.g. approximately 45° with the longitudinal direction of the said first and second frame beams 2 and 3; it is also possible for thus obliquely directed beams to be arranged diagonally between the beams 33 and 34.

The pivot shafts 26 of the second frame beam 3 are located in the extension of the near-by pivot shafts 6 of the first frame beam 2, and the pivot shafts 27 in the extension of the near-by pivot shafts 9.

As is apparent from the foregoing, the machine according to the invention is fitted with a relatively large number of rake members, in this case six, which rake members slightly overlap each other. The machine has a relatively large working width of approximately 7 to 8 metres or more. The forces occurring during operation and acting on the two outer pairs of rake members 14, 16 load the frame beam 2 carrying the rake members to a considerable extent by bending moments acting in an approximately horizontal plane. This relatively heavy load would require a frame beam of a heavy construction, the weight of which, and of course also that of the rake members themselves, would be located at a comparatively great distance behind the coupling points 31, 32 of the three-point lifting hitch. This subjects the tractor to a considerable tail-load moment exercised about the rear axle of the tractor. The steerable front wheels being relieved, this adversely affects the steerability of the tractor to a very high extent, whilst on the other hand there is required a tractor from a certain capacity class in order to avoid a tilting of the tractor about its rear axle, in particular when vertical accelerations occur with a lifted machine.

By distributing the forces acting on the frame, during operation, over the first frame beam 2 and the second frame beam 3, and by dimensioning the said two frame beams, which are intercoupled by the beams 33, 34 and 35, as accurately as is possible in response to these relatively high bending moments acting in a horizontal plane, it is possible to achieve a highly rigid assembly which acts as a horizontal girder, so that the frame beams 2 and 3 may be of a relatively light construction as compared with one single frame beam directly supporting the rake members. The relatively light construction also causes the centre of gravity to be located nearer to the coupling points of the three-point lifting hitch than in the case of one single frame beam located above the row of rake members. Both the total weight and the position of the centre of gravity of the frame 1 (which does not include the trestle 30) co-operate in obviating the above-stated disadvantages. The use of two relatively light frame beams is also possible in a machine comprising four rake members.

Also in the upwardly folded position wherein the rake members 14 and 16 are pivoted upwardly to a transport position, as will be set out in detail hereinafter, one single frame beam located in the position of the first frame beam 2, in particular its central frame section located in the position of the frame section 4, will be subjected to a comparatively heavy load when the machine is in the lifted condition. Also in this transport position, the loads are distributed over two relatively light frame sections 4 and 24 via the coupling beams 33 and the trestle 30.

It should be noted that the second, frontmost frame beam 3 also performs the function of a screen at the front side of the rake members, which screen is imperative in avoiding accidents.

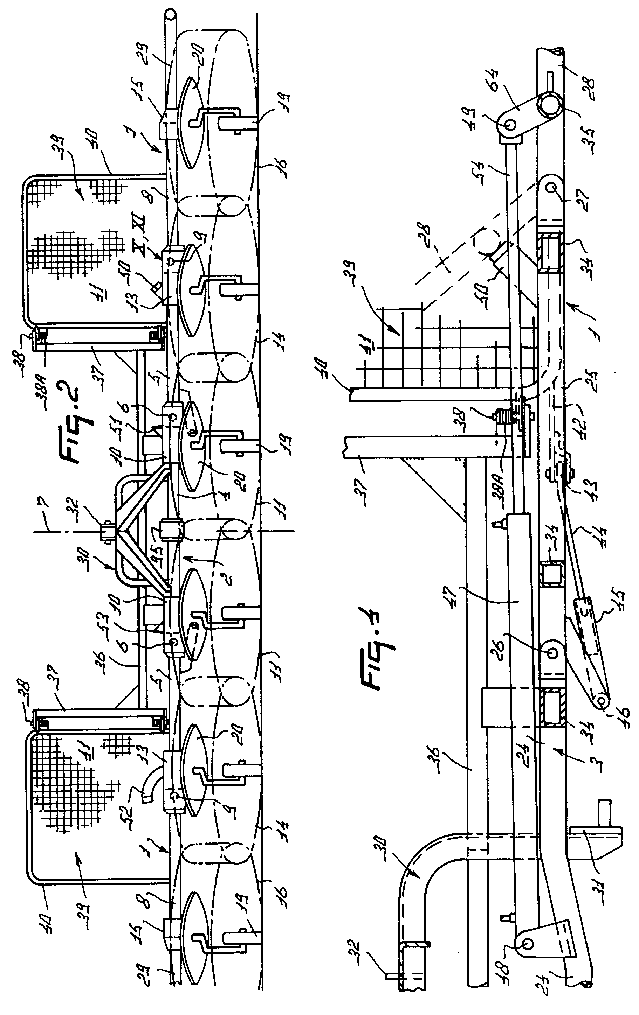

In this embodiment, at the front side of the machine there is connected rigidly to the central section 24 of the second frame beam 3 a horizontal carrier 36, which carrier extends perpendicularly to the symmetry plane 7 and is arranged symmetrically relative thereto (Figures 1 and 4). Seen in the rear view according to Figure 4, the carrier 36 is located approximately midway between the upper coupling point 32 of the trestle 30 and the central section 24, whilst its outer ends, also seen in the rear view of Figure 4, are located between, and in this embodiment approximately halfway between, the pivot shafts 26 and 27. To the ends of the carrier 36 there are connected vertically arranged brackets 37, each of which is provided at its lower and upper side with hinges 38 which are in alignment and constitute an approximately vertical pivot shaft for a screen 39. In the operating position of the machine (see also Figure 2), the two screens 39 are directed approximately perpendicularly to the symmetry plane 7 and are arranged symmetrically relative thereto. In the embodiment shown, each screen 39 includes a rectangular, closed frame 40 which, in the operating position of the machine, extends perpendicularly to the symmetry plane 7. To save weight, the frame 40 may consist of e.g. plastic tubes but a steel or a light-metal construction may also be used. In the embodiment shown, the frame 40 is provided with a gauze cover 41 made of e.g. cloth, metal gauze or plastic gauze, or of aluminium plate and the like.

The distance between the two pivot shafts, about which the screens 39 are pivotable, approximately corresponds to the legally allowed transport width of the machine, i.e. three metres.

At its bottom side and at the side facing the symmetry plane 7, each frame 40 is provided with a lever 42, which is connected rigidly to the frame (Figure 4) and is directed towards the symmetry plane 7.

The free end of the lever 42 is connected capable of pivoting in several directions by means of a ball joint 43 to a pusher rod 44 which extends from the joint 43 obliquely rearwardly towards the symmetry plane 7 and which, in the operative position shown, is inserted over a short length by means of its free end facing the symmetry plane 7 into a hollow pipe 45. At its end remote from the rod 44, the pipe 45 is connected pivotably to only the intermediate section 25 of the second frame beam 3 by means of a ball joint 46. Between the end of the rod 44 and the closed end of the pipe 45 near the joint 46, there is present a length along which the rod 44 can move freely in the pipe 45.

When the intermediate section 25 of the second frame beam 3 is folded upwards about the pivot shaft 26 to a transport position in a manner to be described hereinafter, then the joint 46 which was originally located below the pivot shafts 26 also pivots thereabout (Figure 4) in the outward direction along the arc of a circle, so that the hollow pipe 45 slides further around the rod 44 in the direction of the ball joint 43. During folding of the intermediate section 25, the screen 39 initially maintains its position as it is connected to the central section 24. In a position wherein the intermediate section 25 has pivoted from the position shown in Figure 4 through almost 90°, the free end of the rod 44 abuts on the closed end of the pipe 45 facing the symmetry plane 7. When the intermediate section 25 is pivoted upwardly still further, then the rod 44 is pushed outwardly by the pipe 45. As the centre line of the rod 44, taken in the rear view of Figure 4, crosses the pivot shaft 38 at its front side, by means of the lever 42 the screen 39 is pivoted rearwardly through approximately 90° about the upwardly extending pivot shaft 38 during the last part of the pivotal action of the intermediate section 25, so that each screen 39 protects an upwardly pivoted rake member 14 at its outer side, i.e. within the legally allowed width of 3 metres. The designer may optionally use the entire screen 39 shown or only the frame 40 or part thereof. The position of the screen 39 in the transport position of the machine is denoted in Figure 3 by means of broken lines.

In order to render it possible for the screens 39 to pivot back in time to the position shown in Figures 2 and 4 when the intermediate section 25 is returned again to its operating position, there is provided around each pivot shaft a torsion spring 38A, which acts on the bracket 37 and on the frame 40. As soon as the pusher rod 44 is no longer in contact with the closed end of the pipe 45, the springs 38A cause the screen 39 to pivot back to its initial position (Figures 2, 4).

For the purpose of adjusting the said transport position, there are provided symmetrically relative to the symmetry plane 7 two hydraulic cylinders 47, whose centre lines are located in planes extending perpendicularly to said symmetry plane 7. Each hydraulic cylinder 47 itself is connected pivotably near the symmetry plane 7 with respect to the central section 24, located therebelow, of the second frame beam 3 by means of a pivot shaft 48 (Figure 4) which extends parallel to the pivot shafts 26 and 27, whilst the end of its piston rod is connected only to the end section 28 of the frame beam 3 by means of a pivot shaft 49 arranged parallel to the pivot shaft 48. Each of the two hydraulic cylinders 47 is of the double-acting type.

In the embodiment shown in Figure 1, the two hydraulic cylinders 47, each of which at its side of the symmetry plane 7 bridges the intermediate sections 5 and 25 at their top sides, taken in the direction of operative travel A, are located at a short distance behind the second frame beam 3, the pivot shafts 49 being connected to the beams 35. Preferably, however, the two hydraulic cylinders 47 are arranged straight over the second frame beam 3 in order to avoid bending moments in the beams 35, but in that case the details of the frame beam 3 and of the control of the screen 39 would be covered by the said cylinder constructions, so that the arrangement shown in Figure 1, wherein the cylinders 47 are located behind the frame beam 3, is shown mainly for the sake of clarity.

When the piston rods of the two hydraulic cylinders 47 are retracted, the end sections 8 and 28, the beams 29 and 35 as well as the rake members 16 will first pivot upwardly at both sides of the machine relative to the further portions of the machine about the pivot shafts 9 and 27 which are in alignment.

In this embodiment, the upward pivotal movements at both sides of the symmetry plane 7 are not identical and are not synchronous.

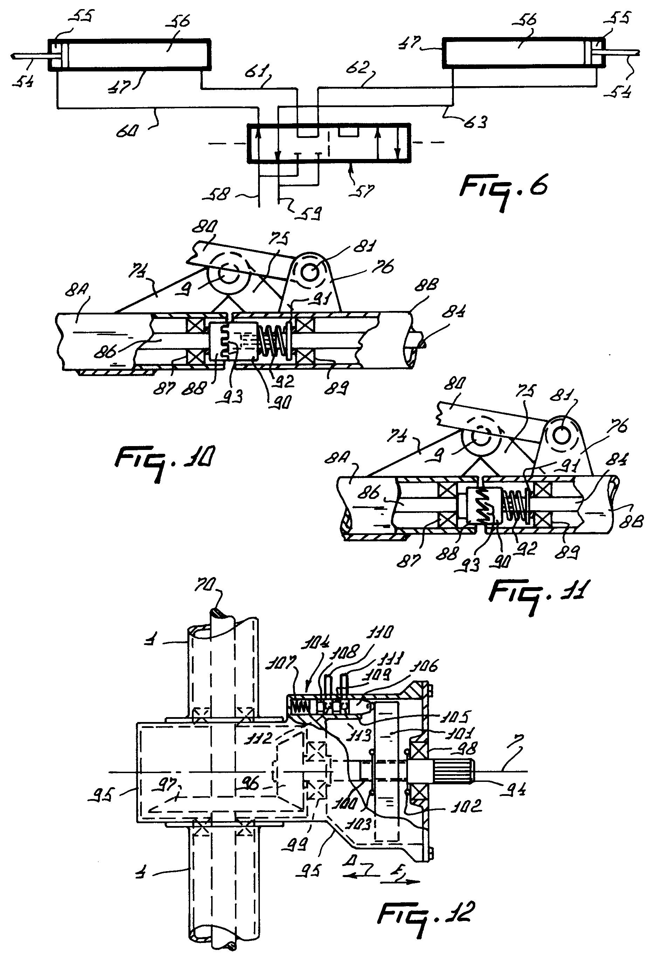

Taken in the direction of operative travel A, the right-hand end portion of the machine, as shown in Figure 1, pivots about the pivot shafts 9 and 27 through an angle of approximately 130° until the upwardly pivoting end section 8 comes into contact with a stop 50 provided on the gear box 13. Thereafter, the combination of this right-hand end section, which has already pivoted, will pivot together with the intermediate sections 5, 25, 34 as a whole about the pivot shafts 6 and 26 until the intermediate sections 5 and 25 have pivoted through an angle of 90° to 100°. After this pivotal movement, the intermediate section 5 contacts a stop 51 provided on the gear box 10. The position then reached is shown in Figure 5.

After actuation of the left-hand hydraulic cylinder 47, the end portion of the machine shown in Figure 1 that, taken in the direction of operative travel A, is the left-hand end portion pivots in a similar manner until that end section 8 has reached a stop 52 provided on the near-by gear box 13, the said end section 8 having passed through, pivoting about the pivot shafts 9 and 27, an angle of approximately 70° to 90° relative to the adjacent intermediate section 5. As soon as the said end section 8 has contacted the stop 52, it pivots, upon a further withdrawal of the piston rod, together with the intermediate section 5 as an integral whole upwardly about the pivot shafts 6 and 26 relative to the central sections 4, 24 which are coupled to the tractor. This joint pivotal action continues until the intermediate section 5 contacts a stop 53 provided on the gear box 10. In said last position, the intermediate section 5 has passed through an angle of 90° to 100° relative to the central section of the frame, as also has the intermediate section 5 at the right-hand side of the machine.

The resultant upwardly pivoted relative positions of the frame portions and the rake members is illustrated in Figure 5. It will be obvious that the rake members 14 and 16 at the right-hand side of the machine must be pivoted upwardly at a higher speed than those at the left-hand side thereof.

As is apparent from the rear view of Figure 5, in the transport position of the machine the rake members are arranged relative to each other within a circumference which may roughly be described as a rectangle. The rake members 11, which are in a fixed position relative to the tractor, then constitute one side of said rectangle, the two rake members 14 constitute the two facing sides thereof, and one of the rake members 16 closes same at the upper side, whilst the other rake member 16 is arranged approximately along the diagonal of the imaginary rectangle.

Since the two rake members 16 have pivoted downwardly, the height of the rake members 14, 16 above the central frame section 4 in the transport position is determined in essence by the largest diameter of only one rake member. The highest point of the machine in its transport position relative to the upper side of the central frame section 4 is less than approximately 1.5 times, in the embodiment approximately 1.40 times, the largest diameter of one rake member, whilst the highest point of the machine of Figure 5 relative to the soil (when the ground wheels bear on the soil) is less than approximately 2 times, in the embodiment approximately 1.80 times, the largest diameter of one of the rake members. In this connection, it should be noted that in principle the upper rake member 16 in Figure 5, if so desired, can be pivoted downwardly still further relative to the intermediate section 5 carrying said rake member, i.e. by adaptation of the stop 52. Then the upper end section 8 moves to between the tines of the lower rake member 16 which is arranged in the diagonal direction and, as will become obvious hereinafter, is freely movable about its rotary shaft in this position. As the upper rake member 16 can also move freely about its rotary shaft in the transport position, the spokes of said latter rake member can move without any difficulties to between the spokes of the rake member 14 which, seen in Figure 5, is the extreme right-hand one. As a result thereof, the overall height of the machine in the transport position, as shown in Figure 5, can be reduced still further.

In the transport position, the rotary shafts of the rake members 11, 14, 16 are all located in the same upwardly directed plane extending transversely to the direction of operative travel A. Seen in rear view, in the transport position, all the rake members are contained within the legally allowed width of three metres.

Because of this compact configuration of six rake members in the transport position of the machine, it is achieved that during transport the machine is not hindered by obstacles such as e.g. low tree branches and cables crossing the road, while it is possible to drive the machine through a normally dimensioned door opening of an agricultural shed, in spite of the fact that it is a machine having six rake members and a working width of approximately eight metres.

As has been set out in the foregoing, during transportation, the screens 39 are pivoted along the outer sides of the upwardly folded rake members 14 in order to prevent accidents.

Since, taken in the direction of operative travel A, the two hydraulic cylinders 47 are located in front of the frontmost points of the rake member, e.g. above the second frame beam 3, the rake members 14, 16, when pivoting upwardly into the transport position, are not hindered by the then upwardly directed cylinders 47. The forces exerted by the cylinders 47 are transferred via the second frame beam 3 and the connecting beams 33, 34, 35 and 29 to the first frame beam 2 carrying the rake members directly. Consequently, the second frame beam 3 has not only the function of providing, during operation of the machine, a stiffening desirable in view of the large working width, as a result of which the position of the point of gravity is moved further upfront, but also has a second function during upward pivoting of the rake members 14, 16 into the transport position as well as in the transport position itself. In the transport position (Figure 5), due to the accelerations occurring in the direction of operative travel A, the upwardly folded rake members 4, 16 together with the relevant frame sections exercise on the combination of the central frame sections 4 and 24 a torsion moment, the vector of which is directed approximately horizontally and transversely to the symmetry plane 7. Owing to the said bending-rigid design of the beams 33, this moment is introduced uniformly into the girder 4, 24, 33, so that the two frame sections 4 and 24 together can participate in absorbing the said moment and no unwanted deformations occur during transport. The same applies in an analogous manner to the beams 34 which are arranged near the pivot shafts 9, 27 and which, in the transport position, distribute the torsion moments caused by the upwardly folded rake members 16 over the frame sections 5 and 25. In the transport position the hydraulic cylinders may be actuated hydraulically permanently, so that in the position shown in Figure 5 all the upwardly pivoted frame sections are pulled forcibly against the respective stops and the upwardly pivoted rake members are locked during transport. Optionally, the second frame beam 3 may also be provided with stops which correspond to the stops 50 to 53 and are located near the pivot shafts 26 and 27.

During operation, the hydraulic cylinders 47 are not actuated hydraulically, so as to render it possible for the rake members 14 and 16 to adapt themselves relative to the rake members 11 by pivoting about the pairs of pivot shafts 6, 26 and 9, 27 to the unevennesses of the soil.

Figure 6 shows the hydraulic circuit which renders it possible for those rake members 14 and 16 which, seen in the rear view of Figure 2, are arranged at the right-hand side of the machine to pivot more rapidly to the transport position than the rake members at the left-hand side thereof. The hydraulic cylinders 47 themselves are arranged at the side facing the symmetry plane 7, whilst the piston rods, at least in the operating position, project outwardly. The hydraulic cylinder 47 shown in Figure 6 at the left-hand side relates to the cylinder which in Figures 1 and 2 is arranged also at the left-hand side. The spaces within the hydraulic cylinders 47 encompassing part of the piston rod 54 are denoted by the reference numeral 55, whilst the portion of the space within the cylinder 47 not encompassing a piston rod is denoted by the reference numeral 56. The two cylinders are operated by a valve 57 which, as is apparent from Figure 6, can occupy two positions. In the manner shown in Figure 6, the valve 57 is coupled to the cylinders 47 by means of two pairs of hydraulic tubes, and at its other side is connected to the hydraulic system of the tractor. The valve 57 can be operated from the driver's seat of the tractor and may be mounted on the hay-making machine; the operation from the driver's seat of the tractor is effected mechanically, e.g. via cords. The construction of the valve 57 is not described in further detail here, as the normalized schematical representation thereof shown in Figure 6 will be clear to any person skilled in the art. In the position of the valve as shown, hydraulic fluid is fed under pressure via the line 58 and fed back to the fluid tank via the line 59.

In order to fold the two pairs of rake members 14 and 16 upwardly into the transport position, hydraulic fluid is fed under pressure via a line 60 to the space 55 of the cylinder 47 which in Figure 1 is the left-hand one, thereby causing the piston of the said cylinder to move towards the symmetry plane 7. The fluid forced from the space 56 by the said piston has, for each centimetre of piston displacement, a larger content than the fluid fed into the space 55, as no piston rod is present in the space 56. This displaced fluid is brought via a line 61, the valve 57 and a line 62 to the space 55 of the right-hand cylinder 47, which causes the piston of said latter cylinder to be moved through a distance towards the symmetry plane larger than the piston displacement of the left-hand cylinder, as the space 55 comprises the content of a piston rod. The fluid displaced from the right-hand cylinder 47 is fed back to the tractor via a line 63 and the line 59. From the foregoing it will be apparent that for the series arrangement of Figure 6 the upward pivotal movement of the rake members 14, 16 at the right-hand side of the machine proceeds faster than the displacement of the rake members 14, 16 at the left-hand side thereof, so that, as is shown in Figure 5, the lower rake member 16 has pivoted already to between the two rake members 14 before the upper rake member 16 is pivoted to above the lower rake member 16.

When the valve 57 shown in Figure 6 is moved towards the left, hydraulic fluid is fed under pressure to the space of the left-hand cylinder 47 via the lines 58 and 61, so that the piston rod of the said cylinder is moved outwardly. The quantity of hydraulic fluid forced from the space 55 is now less, for each centimetre of piston displacement, than the quantity fed into the space 56. This relatively smaller quantity is now fed via the lines 60 and 63 to the space 56 of the right-hand cylinder 47, whereby the piston rod of this right-hand cylinder 47 then emerges, but at a lower speed than the piston rod of the left-hand cylinder 47, as the space 56 of the right-hand cylinder 47 does not comprise the volume of a piston rod. The fluid forced from the space 55 of the right-hand cylinder is fed to the fluid tank via line 62, the valve 57 and the line 59. As is shown in Figure 5, the pivoting movement of the rake members 14 and 16 belonging to the left-hand half of the machine shown in Figure 1 will proceed at a higher speed than that of the rake members 14 and 16 belonging to the right-hand half thereof, so that the lower rake member 16 in Figure 5 can pivot to its operating position without being hindered by the upper rake member 16.

From the foregoing it will be apparent that, in order to use different pivotal speeds for moving the rake members 14, 16 to the transport position or to the operating position, respectively, it will suffice to utilize hydraulic cylinders 47 having the same cylinder diameter and piston rod diameter. The dimensioning of the relative ratio between these diameters determines the ratio of the pivotal speeds. In the case of the embodiment shown, wherein the end section 8 and the intermediate section 5 of the right-hand pair of rake members 14, 16 passes through a wider pivotal angle than the end section 8 and the intermediate section 5 of the left-hand pair of rake members 14, 16, the stroke to be passed through by the right-hand cylinder 47 relative to the stroke of the left-hand cylinder can be made equal to each other by the dimensioning of the length of the levers whereon the cylinders 47 exercise their moment, e.g. the length of the levers 64 as shown in Figure 4 for the right-hand portion of the machine.

Acting thus, it can be achieved that by using two identical hydraulic cylinders it is possible to effect the desired mutual relative acceleration or deceleration of the machine portions which pivot to the transport position and to the operating position.

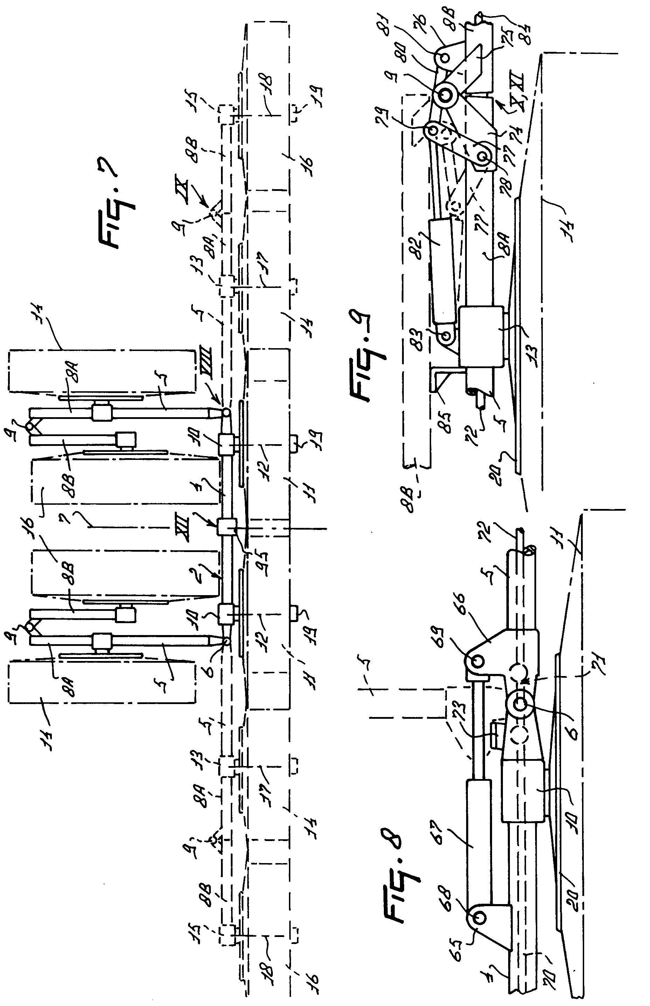

Figures 7 to 12 show a second embodiment of a machine comprising six rake members, in which embodiment the two outermost pairs of rake members are pivoted to such a transport position that the machine width is within the legally allowed transport width of three metres, and wherein it is the object to keep the overall height of the machine in the transport position as low as possible. For the sake of clarity of the drawings, Figure 7 shows only a frame beam 2 wherein the rake members are supported, but it will be obvious that the use of a second frame beam 3 and coupling beams 33, 34 and 35 as used in the first embodiment is also possible for the second embodiment in order to achieve the advantages associated therewith as described with reference to the first embodiment. Machine parts shown in the second embodiment which correspond to identical machine parts of the first embodiment are denoted by the same reference numerals; only machine parts having a different function or parts which have not been stated in the description of the first embodiment are given a different reference numeral.

The operating position of the frame beam 2 is indicated in Figure 7 by means of broken lines, the transport position by solid lines.

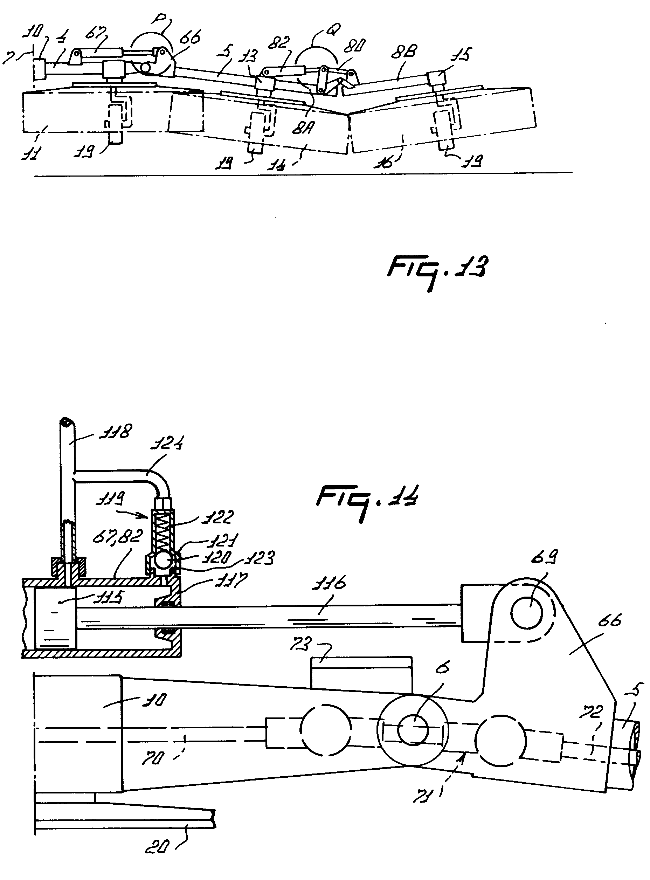

In the second embodiment as shown in Figure 7, the rake members 14 and 16 at each side of the symmetry plane 7 are not pivoted upwardly by means of one single hydraulic cylinder, but a separate hydraulic cylinder is used for each individual pivot shaft 6, 9. These pivotal connections are represented in Figures 8 and 9, respectively, for the right-hand half of the machine; for the left-hand half these connections are arranged mirror-invertedly. As is shown in Figure 8, to the upper side of the central frame section 4 there is fitted rigidly a support 65 which is provided near the gear box 10. To the upper side of the intermediate section 5 there is fitted rigidly a support 66 located near the pivot shaft 6. The two supports 65 and 66 are intercoupled by means of a double-acting hydraulic cylinder 67 which bridges the gear box 10 and the pivot shaft 6 and, by means of pivot shafts 68 and 69, is coupled pivotably to the supports 65 and 66. Figure 8 also shows a drive shaft 70 which is accommodated within the hollow central frame section 4 and drives the gear transmission located within the gear box 10 and serving to drive a rake member 11. A shaft projecting from the gear box 10 and also driven by the shaft 70 is in driving connection by means of a double universal joint 71 with a drive shaft 72 accommodated within the hollow intermediate section 5 and serving to drive the rake members 14 and 16. Between the gear box 10 and the pivot shaft 6 there is provided a stop 73 for limiting the pivotability of the intermediate section 5 relative to the central section 4. It should be noted that, like in the previous embodiment, the pivot shaft 6 is arranged as closely as possible to the gear box 10.

Figure 9 shows the pivotal connection between the intermediate section 5 and the end section 8. In this case, the pivot shaft 9 is arranged remote from the gear box 13; the distance between the pivot shaft 9 and the gear box 13 is less than that between the pivot shaft 9 and the gear box 15, the former distance being at least 20% of the distance between the two gear boxes 13 and 15. In this case, the end section 8 is divided near the pivot shaft 9 into a section 8A which is rigidly connected to the gear box 13 and a section 8B which, together with the rake member 16, is pivotable relative to the section 8A about the pivot shaft 9. To the end sections 8A and 8B there are connected rigidly lugs 74 and 75, respectively, which project for a short distance from the upper sides of the said sections 8A and 8B and support the pivot shaft 9 there. At the outer side of the pivot shaft 9, a support 76 is fitted rigidly to the upper side of the section 8B. At the inner side of the pivot shaft 9, the front and rear sides of the section 8A are each provided with a guide rod 77, which guide rods 77 together are pivotable relative to the section 8A about a pivot shaft 78 extending parallel to the pivot shaft 9. In the operating position of the machine, the guide rods 77 extend obliquely upwardly and outwardly from the pivot shaft 78. Near the upper free ends of the two guide rods 77 located on both sides of the section 8A there is arranged a pivot shaft 79, about which is pivotable a coupling rod 80 which is directed outwardly in the operating position of the machine. The end of the coupling rod 80 remote from the pivot shaft 79 is connected pivotably by means of a pivot shaft 81 to the upper side of the support 76. Considered in height, in the operating position of the machine, the centre line of the pivot shaft 81 is at approximately the same level above the upper side of the end section 8 as that of the pivot shaft 9. About the pivot shaft 79 there is also provided pivotably the end of a piston rod of an hydraulic cylinder 82, whose other end is connected pivotably by means of a pivot shaft 83 to the upper side of the gear box 13. In the position shown in Figure 9, the hydraulic cylinder 82 is located above the end section 8A. The centre lines of the pivot shafts 79, 81 and 83 extend parallel to the centre line of the pivot shaft 9. The assembly is dimensioned such that a connecting line between the centre lines of the pivot shafts 79 and 81 crosses above the centre line of the pivot shaft 9.

When the pivot shaft 82 is energized hydraulically, whereby its piston rod is withdrawn, the end section 8B and the rake member 16 supported thereby will pivot upwardly about the centre line of the pivot shaft 9, since the centre line of the coupling rod 80 is located at some distance above the centre line of the pivot shaft 9. In this situation, the guide rods 77 absorb part of the forces exerted by the cylinder 82.

Thus, it is possible for the end section 8B to accomplish a pivotal movement of 180° about the pivot shaft 9. The position of the construction after the pivotal movement through 180° is indicated by broken lines in Figure 9. In this position, the guide rods 77 have pivoted by means of their upper sides towards the cylinder 82 itself, the piston rod being in the retracted position. In the position after the pivotal movement through 180° effected for the transport position, the coupling rod 80 is positioned such, because of the pivoted position of the guide rods 77, that the connecting line between the centre lines of the pivot shafts 79 and 81 still crosses above the centre line of the pivot shaft 9, so that, when the piston rod of the hydraulic cylinder 82 is pushed outwardly, the end section 8B will pivot back again through 180° to its operating position together with the rake member 16.

The drive shaft 72 located in the intermediate section 5 drives, via the drive accommodated in the gear box 13, the rake wheel 14 as well as an outgoing shaft 86 accommodated in the end section 8A (Figure 10); the outgoing shaft 86 is coupled to a shaft 84 driving the rake member 16 by means of a coupling located below the pivot shaft 9 and to be described in further detail hereinafter.

At the side of the hydraulic cylinder 82 facing the symmetry plane 7, the gear box 13 is provided with a stop 85, against which the end section 8B is drawn in the transport position under the action of the double-acting hydraulic cylinder 82.

Figure 10 shows an embodiment of a coupling between the drive shafts 86 and 84 serving to drive the outermost rake member 16. At the side of the gap in the end section 8 facing the symmetry plane 7 (i.e. the gap between the end sections 8A and 8B), the drive shaft 86 is supported by means of a bearing 87 in the hollow, tubular end section 8A. At the side remote from the symmetry plane 7, one half of a claw coupling 88 is fitted to the shaft 86 next to the support 87 in such a manner that the outer boundary face thereof is located approximately in the vertical plane through the centre line of the pivot shaft 9, when the machine is in its operating position. In a position located approximately below the pivot shaft 81, the drive shaft 84 is supported in the hollow, tubular end section 8B by means of a bearing 89. At the side of the bearing 89 facing the coupling half 88, the drive shaft 84 is provided with axial splines, over which a second coupling half 90 is axially slidable on the shaft 84. Between a shoulder 91 mounted on the shaft 84 near the bearing 89 and the coupling half 90 there is fitted a pressure spring 92. At that end portion of the shaft 84 facing the coupling half 88 there is provided a stop (not shown), which stop prevents the possibility of the coupling half 90 being pushed from the shaft 84 under the action of the pressure spring 92 in a direction away from the bearing 89 when the end section 8B has pivoted upwardly to a transport position. The two coupling halves 88 and 90 are both provided with claws 93 which are distributed uniformly along the circumference thereof and interlock in the operating position. Taken in the peripheral direction, the claws of the coupling half 88 may have some clearance relative to those of the coupling half 90; this is permissible in that the coupling is loaded always in one sense of rotation only.

The number of claws per coupling half is equal to the number of spokes 21 (in this embodiment: six) of the rake member 16 to be driven thereby. The choice of the number of spokes is made in connection with the fact that, when the end section 8B is swivelled from the transport position back to the operating position (shown in Figure 10) and the claws of the coupling half 90 engage those of the coupling half 88, there is the certainty that (in the area of overlap between the rake members 14 and 16) the ends of the spokes of the rake member 16 will be moved to a position halfway between the ends of the spokes 21 of the rake member 14, so that the rake members 14 and 16 can be driven synchronously with an appropriate relative arrangement of the sets of teeth. This is based on the assumption that the transmission ratio in the gear box 15 between the shaft 84 and the rake member 16 is 1 : 1. In order to obtain a transmission ratio of e.g. 1 : 1.5, four claws must be provided per coupling half.

During the downward pivotal movement of the end section 8B towards the operating position, there is the possibility that the claws 93 of the coupling half 90 will not immediately interlock with those of the coupling half 88. In that case, the coupling half 88 can slightly shift the other half 90 towards the bearing 89 along the splines provided on the shaft 84 at simultaneous compression of the spring 92. When the drive of the drive shaft 86 is actuated, the claws of the coupling half 90 will immediately interlock with those of the coupling half 88 under the action of the pressure force of the spring 92. This is facilitated by the above-stated clearance between the claws; in the operating position of the machine, this clearance also allows of small shifts of the end section 8B relative to the end section 8A about the pivot shaft 9.

Figure 11 shows an alternative embodiment of the coupling 88, 90, wherein the claws on the two coupling halves are of a conical and pointed structure at their facing sides and wherein, preferably, there is also some clearance between the claws of the two coupling halves. The wedge-shaped structure of the claws facilitates a proper meshing of the coupling halves during pivoting into the operating position. Also in this embodiment, each coupling half is provided with six claws, which number is equal to the number of spokes of the rake members 14 and 16 so as to ensure an appropriate relative position of the two rake members, again based on the assumption of a transmission ratio of 1 : 1 in the gear box 15.

Figure 12 shows an embodiment of a measure for solving the problem of the tractor driver inadvertently causing the rake members 14, 16 to pivot upwardly to the transport position or downwardly to the operating position while the rake members are driven. On the other hand, it is recommendable to ensure that the tractor driver can only pivot the rake members upwardly when they are in the non-driven state. A solution to this problem as shown in Figure 12 relates to both the first embodiment of Figures 1 to 6 and to the second embodiment of Figures 7 to 11.

The solution shown in Figure 12 relates to the machine drive, arranged near the symmetry plane 7, by means of an ingoing shaft 94 which, when the machine is coupled to a tractor, is in driving connection with the power take-off shaft of the tractor via an intermediate shaft provided with universal joints. The ingoing shaft 94 is supported in a housing 95. The drive of the ingoing shaft 94 is transferred in a known per se manner via a gear wheel transmission 96, 97 to the drive shafts 70 supported in the central frame section 4.

Inside the housing 95, the ingoing shaft 94 is bearing-supported by means of two bearings 98 and 99 which, taken in the direction of the shaft 94, are arranged spaced from each other. Part of the length of the ingoing shaft 94 extending between the bearings 98 and 99 is provided with a thread 100. The part of the ingoing shaft 94 provided with the thread 100 has a larger diameter than the adjoining shaft portions, so that during assembly it is possible to slide a ring 101 over the free end of the shaft 94 and to screw same onto the thread 100. The ring 101, which is provided with internal thread and may be in the form of a disc, has a cylindrical outer circumference. Limited by the internal dimensions of the housing 95, the ring 101 has a maximum outer diameter and its axially measured thickness has been chosen such that it has a maximum moment of rotational inertia. The ring 101 is freely rotatable by means of the thread 100. When the ring 101 rotates relative to the ingoing shaft 94, the said ring consequently moves in an axial direction relative thereto. This axial displacement is limited at both sides by stops 102 and 103 which, taken in the axial direction, are located at such a constant distance relative to each other that, when the ring 101 turns on the thread relative to the shaft 94, it can move freely in the axial direction therebetween. The stops 102 and 103 are designed as axial ball bearings so as to achieve that, when the axially moving ring 101 contacts one of same, no clamping occurs. Such a clamping is prevented in that the ball bearing half contacted by the ring 101 remains rotatable relative to the other ball bearing half which is remote from the ring 101 and is locked on the shaft 94.

At one side of the housing 95 there is arranged a hydraulic valve 104 comprising a bore made in a housing portion 105 and a slide 106 which is axially slidable in said bore and parallel to the shaft 94. By means of a pressure spring 107, the slide 106 is loaded in the direction towards to circumference of the ring 101. The slide 106 is provided with two annular recesses 108 and 109, respectively, which are arranged at its circumference and are axially spaced apart. At the outer circumference of the housing 95, the housing portion 105 is fitted with connection means 110 and 111, respectively, intended for hydraulic lines, the connection 110 corresponding to the supply of the hydraulically pressurized fluid and the connection 111 corresponding to the discharge thereof. The lines connected to the connection means 110 and 111 are connected to the hydraulic system of the tractor. Connection means 112 and 113 are arranged at the upper side of the housing 95, the connection 112 being intended for the connection of a hydraulic line leading to the above-described hydraulic cylinders serving for the upward and downward pivotal movement of the rake members 14 and 16, and the connection means 113 being intended for the connection of a line discharging the hydraulic fluid. Taken in the axial direction of the slide 106, the spacing between the annular recesses 108 and 109 provided at the outer circumference thereof is equal to that between the connection means 112 and 113. In the position shown in Figure 12, a connection between the connection means 110 and the connection means 112 for pressurized fluid is blocked, as is also that between the connection means 111 and 113.

The end of the slide 106 facing the ring 101 is fitted with a freely rotatable roller or ball, by means of which the slide 106 can roll along the outer circumference of the ring 101.

When the power take-off shaft of the tractor, and hence at the same time the ingoing shaft 94 of the machine, is caused to rotate, due to the rotational acceleration of the shaft 94 the ring 101 will lag behind relative to the shaft 94 because of its relatively large moment of rotational inertia. The pitch of the thread 100 is such that the ring 101 lagging behind relative to the shaft 94 will move in the axial direction of the shaft 94, i.e. in the direction D shown in Figure 12. Then the ring 101 forces the slide 106 against the action of the spring 107 into the direction of the position shown in Figure 12, so that the supply and discharge of pressurized hydraulic fluid from the tractor to the machine is blocked. In this position, the ring will be fully contiguous to the rotatable stop 103 and then fully co-rotates with the shaft 94.

When the drive of the power take-off shaft and hence the drive of the shaft 94 is made inoperative, due to the rotational deceleration of the shaft 94 the ring will move axially into the direction F relative thereto until it will be fully contiguous to the stop 102 and then is stationary relative to the shaft 94. As a result of this axial displacement of the ring 101, the slide 106 is also pushed into the direction E by the spring 107, so that the respective connections between the connection means 110 and 112 and the connection means 111 and 113 are effected.

In said first case, the rake members 14, 16 can no longer be pivoted by the tractor driver after the drive of the machine has started, while in the second case, when the shaft 94 has stopped, the rake members 14 and 16 can be pivoted upwardly to the transport position without any further measures. Therefore, the provision shown in Figure 12 operates fully automatically.

It will be obvious that the provision shown in Figure 12 can also be utilized in the embodiment of Figure 1.

When the parallel-arranged hydraulic cylinders 67 and 82 (Figures 8 and 9) are energized such by means of a valve which is operable from the tractor that the piston rods are moved in the cylinders, the end sections 8 will pivot upwardly in the above-described manner about the pivot shafts 9 relative to the intermediate sections 5 of the frame beam 2 to the position shown in Figure 9 by broken lines, the end sections 8 having been pivoted through an angle of approximately 180°. At the same time, the intermediate sections 5 will pivot upwardly relative to the central frame section 4 about the pivot shaft 6 to the transport position. The said pivotal movements are limited by the respective stops 85 and 73. It is recommendable for the pivotal action of each end section 8 relative to the adjacent intermediate section 5 to proceed faster than that of the intermediate section 5 relative to the central section 4. For example, the end section 8 may have been pivoted relative to the intermediate section 5 already through an angle of 180° or part thereof before the intermediate section 5 has pivoted through 90° relative to the central section 4 (cf. the ultimate transport position shown in Figure 7). This can be achieved by making the cross-section of the cylinder 82 that is effective for the hydraulic forces to be exerted larger than that of the cylinder 67, although it should be taken into account that the cylinder 82 need only exercise a smaller pivotal moment than the cylinder 67. It is alternatively possible to so connect the two cylinders 67 and 82 in a known per se manner that the pivotal action by means of the hydraulic cylinder 67 does not start until the pivotal movement through 180° by means of the cylinder 82 has been completed. In addition, it is possible to utilize the series arrangement of the cylinders as shown in Figure 6, but then applied to the cylinders 67 and 82 on each side of the symmetry plane 7.

As is apparent from Figure 7, the intermediate section 5 has pivoted upwardly into the transport position about the pivot shaft 6 through an angle of approximately 90° relative to the central section 4, the intermediate section 5 being forced against the stop 73 by hydraulic pressure during transport. In this transport position, the end section 8, respectively the end section 8B which has pivoted through an angle of approximately 180° relative to the intermediate section 5, extends also approximately perpendicularly to the central section 4 in such a manner that the rake member 16 is located between the symmetry plane 7 and the end section 8B and that the rake member 14 is located at the outer side of the intermediate section 5. The pivot shaft 9 is located near the upper side of the machine in the transport position. Then, the outer boundary faces of the rake members 14 approximately coincide with those of the subjacent rake members 11, so that the rake members 11 may occupy a total width of three metres (or slightly less when the screens 39 are used) before the legally allowed maximum width is reached. In the embodiment shown in Figure 7, the upwardly pivoted rake members 14 and 16 are arranged in a side-by-side relationship, the rotary axes being located in the same upwardly directed plane extending transversely to the direction of operative travel A; the rotary axes of the rake members 11 are also located in this plane.

As is furthermore apparent from Figure 7, in this manner it is possible to achieve a relatively very small height of the machine in the transport position. The dimension measured in the vertical direction from the highest point of the machine in the transport position to above the upper side of the central frame section 4 is less than 1.30 times the largest diameter of one of the rake members 11, 14, 16 (measured in Figure 7, this value is approximately 1.15). The distance in the vertical direction between the highest point of the machine bearing on the soil in the transport position and said soil is less than 1.70 times the largest diameter of one of the rake members. This ratio may be even less than 1.60, in the embodiment shown it is approximately 1.55. Essentially, the said ratios are independent of the total width of the machine in the transport position; the said last width is limited by the legally allowed width.

It should be noted that the use of four hydraulic cylinders 67, 82 for pivoting upwardly four of the six rake members into the transport position can also be employed in the first embodiment, optionally with the use of the circuit shown in Figure 6 at each side of the symmetry plane 7.

As has already been stated in the foregoing, the division of the supporting frame 1 into the frame beams 2 and 3, interconnected by the beams 33, 34 and 35, may also be utilized in the second embodiment.

The screens 39 and their control mechanisms, as described in connection with the first embodiment, may also be utilized in the machine in accordance with the second embodiment.

The provision shown in Figure 12, whereby the rake members 14, 16 are automatically prevented from pivoting upwardly when the machine is operative, may also be utilized in the machine in accordance with the first embodiment.

The use of the couplings shown in Figures 10 and 11 for the machine in accordance with the first embodiment is possible without any further measures, as is also the use of the guide rod 77 for guiding the coupling rod 80 above the upper side of the near-by pivot shaft (Figure 9) at large pivotal movements of the frame beams relative to each other.

Figure 13 is a schematical rendering of a rear view of the machine half located at one side of the symmetry plane and in accordance with Figures 7 to 9. Here, just prior to being placed on the soil, the machine is still supported by the lifting device of the tractor. In practice, it happens that, taken relative to the horizontal central frame section 4, the intermediate frame section 5, being coupled to the hydraulic cylinder 67, is directed downwardly in the outward direction. This position of the intermediate frame section 5 is allowed constructionally for following unevennesses in the soil, so that it can also be assumed without further measures when the machine is about to be placed on the soil. This implies that the ground wheel 19 arranged near the outer end of the intermediate section assumes the oblique position as shown in the view according to Figure 13. When the machine is then placed on the soil (in particular when the tractor has stopped), the ground wheel 19 is forced to slide sidewardly over the soil in the outward direction due to the extending movement of the frame sections 4 and 5. This may result in a serious damage of the ground wheel attachment and/or of the ground wheel itself.

Similarly, it happens that, just prior to the machine being placed on the soil, taken in the outward direction relative to the intermediate section 5 and also relative to the central section 4, the end section 8 is directed upwardly (or downwardly, as is not shown), whereby the outermost ground wheel 19 assumes the oblique position as shown in view according to Figure 13. When the machine is placed on the soil, this ground wheel will also be forced to slide sidewardly over the soil upon extension of the frame sections 4 and 5. This, too, may result in damage thereof.

In order to provide a solution to this problem, the ground wheel 19 supporting the intermediate section 5 and/or that supporting the end section 8 may be designed as a swivel wheel or follower wheel, respectively, which can swivel about a vertical shaft. In that case, the swivel wheel 19 will be allowed to swivel about the said vertical shaft upon lateral displacement without being subjected to lateral forces itself.

A second solution to this problem is shown in Figure 14 and concerns a very simple provision arranged to the hydraulic cylinder 67 which is coupled to the intermediate section 5 and/or arranged to the hydraulic cylinder which is coupled to the end section 8. The piston of the partly shown cylinder is denoted by the reference numeral 115 and the piston rod by the reference numeral 116.

In Figure 14, the piston is shown relative to the cylinder itself in a position wherein the central frame section 4 and the intermediate frame section 5 (and, if applicable, the end section 8) are exactly in alignment during the downward pivotal movement of the intermediate section 5 (and, if applicable, the end section 8) towards the operating position; as is desired, the relevant ground wheels are then arranged vertically. Then, the piston is located still at some distance from the end wall 117 of the hydraulic cylinder.

In this position, the piston itself blocks a line 118 serving in this case as a discharge line for hydraulic fluid. Concequently, the piston 115 stops its movement into the direction of the end wall 117 when the frame beam sections 4, 5, respectively 4, 5, 8, are in alignment and the ground wheels are arranged vertically.

In order to render it possible for the piston to move, during operation (i.e. when the machine bears on the soil), farther into the direction of the end wall 117 to allow of a movement of the frame sections 4, 5, respectively 4, 5, 8, in response to unevennesses in the soil, there is provided near the inner side of the end wall 117 a second discharge opening which is connected to a hydraulic valve 119. The valve 119 includes a ball 120 which, in a direction away from the cylinder 67, 82, can be pressed onto a seat 121, whereby the discharge of fluid from the cylinder 67, 82 is interrupted. The ball 12 is loaded into the direction towards the hydraulic cylinder 67, 82 by means of a pressure spring 122. When the ball 120 is moved from its seat 121 in the direction towards the cylinder 67, 82, this movement is limited by a stop 123. The stop 123 is provided with through-flow openings for the hydraulic fluid.

At its side facing away from the cylinder 67, 82, the valve 119 is provided with a line 124 connected to the line 118.

When the machine having its piston in the position as shown is still located above the soil (the line 118 being blocked and the frame sections 4, 5 or 4, 5, 8 being in alignment), then the pressurized fluid present between the piston 115 and the end wall 117 cannot escape via the valve 119 because the force exercised on the ball 12 by the pressure spring 122 is insufficient to lift same from its seat against the fluid pressure.

However, when the machine is placed on the soil and the ground wheel 119 bear thereon, then the pressure of the fluid present between the piston 115 and the end wall 117 is relieved, so that the pressure spring 122 lifts the ball 120 from its seat and the fluid can flow unimpededly to the line 118 (which is then in connection with the fluid tank). As a result, the frame section(s) 5 and/or 5, 8 can move freely relative to the frame section 4 in order to follow the unevennesses in the soil.

In order to return the machine to its transport position, pressurized fluid is supplied through the line 124. Then, the ball 12 is lifted from its seat (and bears against the stop 123) and the fluid is allowed to flow into the cylinder space between the piston 115 and the end wall 117. After a slight displacement of the piston 115, the fluid is also allowed to enter via the line 118.

Preferably, the piston 115 is dimensioned such that, during operation of the machine, it permanently blocks the line 118.

It will be obvious that the two said solutions to the problem shown in Figure 13 can also be applied to machines having four rake members, the two outermost rake members of which are supported on arms that are attached directly to the central frame portion.

The invention is not limited to the features described in the description and/or in the claims but also relates to all the details of the drawings, whether they have been described or not.

## Claims

1. A hay-making machine comprising a frame (1) including a first frame beam supporting at least six rake members (11, 14, 16) which are drivable about upwardly directed, rotary axes (12) and are supported side-by-side in a frame beam (2) comprising frame beam sections (4, 5, 8) which are pivotally connected with one another, such that part of the rake members (11, 14, 16) supported by one or more frame beam sections is upwardly pivotable to a transport position, characterized in that the machine is provided with a second frame beam (3) having the same number of beam sections (24, 25, 28) as the first mentioned frame beam (2), which sections are pivotally connected with one another about pivot shafts, wherein the pivot shafts (26, 27) of the second frame beam (3) are located in the extension of the near-by pivot shafts (6, respectively 9) of the first frame beam (2).

2. A hay-making machine according to claim 1, characterized in that the pivot shafts (26; 27) of the second frame beam extend approximately horizontally and into the direction of operative travel A.

3. A hay-making machine according to any one of the preceding claims, wherein the sections (4, 5, 8) of the first frame beam (2) are rigidly interconnected with the corresponding sections (24, 25, 28) of the second frame beam (3).

4. A hay-making machine according to any one of the preceding claims, characterized in that the end sections (28) of the second frame beam (3) extend, seen in plan view, with a curve outwardly and rearwardly towards the outermost tip positions of the tines of the outermost rake members (16).

5. A hay-making machine according to any one of the preceding claims, characterized in that two adjacent frame beam sections of the first and second frame beam (2, respectively 3) are pivotable relative to one another by means of a separate hydraulic cylinder (67, 82).

6. A hay-making machine as claimed in claim 5, characterized in that the frame beam sections (5, 26) and (8, 28) at the other side can be pivoted to one another with the aid of the hydraulic cylinder (82) through an angle of approximately 180° both in an upward and in a downward direction.

7. A hay-making machine as claimed in any one of the preceding claims, characterized in that the central section (24) of the first frame beam (2) and the central section (24) of the second frame beam (3) are rigidly interconnected by means of a trestle (30) which at its front side is provided with couplings (31, 32) to couple the machine to a three-point lifting hitch of a tractor.

8. A hay-making machine as claimed in any one of the preceding claims, characterized in that to the central section (24) of the second frame beam (3) there is connected a horizontal carrier (36).

9. A hay-making machine according to claim 8, characterized in that, seen in rear view, the carrier (36) is located approximately midway between the upper coupling (32) of the trestle (30) of the central section (24), whilst its outer ends are located approximately half-way between the pivot shafts (26 and 27).

10. A hay-making machine according to any one of the claims 8 or 9, characterized in that to the ends of the carrier (36) there are connected vertically arranged brackets (37), each of which is provided with hinges (38) which constitute an approximately vertical pivot shaft for a screen (39).

11. A hay-making machine as claimed in claim 10, characterized in that the screen (39) comprises a rectangular closed frame (4) which in the operating position extends perpendicular to the direction of movement of the machine.

12. A hay-making machine as claimed in claim 10 or 11, characterized in that the distance between two pivot shafts about which the screens (39) are pivotable approximately corresponds to the legally allowed transport width of the machine.

13. A hay-making machine as claimed in any one of the claims 10 - 12, characterized in that the screens (39) are pivoted rake member (14) at its outer side, whereby the screens are directed in the direction of movement of the machine.
